# EUROPEAN PATENT SPECIFICATION

(11) **EP 3 717 078 B1**
(45) Date of publication and mention of the grant of the patent: **21.02.2024**
(21) Application number: 17933337.2
(22) Date of filing: 30.11.2017
(51) Int. Cl.: A62B 23/02

(54) **FILTERING MASK WITH ANTI-COUNTERFEIT FUNCTION**
FILTERMASKE MIT FÄLSCHUNGSSICHERER FUNKTION
MASQUE FILTRANT POURVU D'UNE FONCTION ANTI-CONTREFAÇON

(43) Date of publication of application: 07.10.2020
(73) Proprietor: Honeywell International Inc., Morris Plains, NJ 07950 (US)
(72) Inventor: XIANG, Hong Bing, Morris Plains, New Jersey 07950 (US); SHEN, Weifeng, Morris Plains, New Jersey 07950 (US); LU, Yuzheng, Morris Plains, New Jersey 07950 (US); MA, Chuang, Morris Plains, New Jersey 07950 (US)
(74) Representative: Haseltine Lake Kempner LLP
(86) International application number: PCT/CN2017/113803
(87) International publication number: WO 2019/104586

(56) References cited:
- CN-A- 101 068 966
- CN-A- 103 284 357
- CN-A- 105 908 376
- CN-A- 105 908 376
- CN-U- 205 321 285
- US-A- 4 177 312
- US-A- 4 177 312
- US-A- 6 045 894
- US-A1- 2014 182 600

## Description

### BACKGROUND

Dust masks, and other face masks, may be worn in various situations, such as in city environments where the ambient air could be dangerous to the user, or work environments, where the user may be exposed to dangerous particles in the air. Masks may be worn over the user's nose and mouth to ensure that the user does not inhale hazardous materials. In some cases, face masks may comprise exhalation valves. Filtering masks typically contain filtering media that can lock up potentially hazardous particulate matter.
US 2014/182600A1 discloses a filtering face-piece respirator that comprises a harness and a mask body that has a pleat. The mask body has an indicia located within the pleat in at least a partially non-visible location when the pleat is folded. The indicia is made from a weld pattern and is fully visible when the pleat is unfolded. The fully visible indicia provides an indication to the wearer that the mask body is in its proper unfolded condition. The indicia also includes welded lines that extend normally across the pleat to improve collapse resistance.

### SUMMARY

In an embodiment, a filtering mask may comprise at least one filter media layer configured to filter particulate matter to produce breathable air and comprising an outer layer and an inner layer, the inner layer forming an inner surface of the filtering mask; and at least one anti-counterfeit layer attached to the at least one filter media layer, configured to identify the filtering mask as a legitimate filter and distinguish the filtering mask from counterfeit masks, wherein the at least one anti-counterfeit layer comprises at least one logo incorporated into at least one surface of the at least one anti-counterfeit layer, wherein the at least one anti-counterfeit layer is located between the inner layer and the outer layer.

In an embodiment, a method of manufacturing a filtering mask may comprise extruding a filtering material from a source of the filtering material; melt-blowing the extruded filtering material to form a plurality of fibers; collecting the melt-blown fibers onto an outer surface of a lathe, wherein the outer surface of the lathe comprises a logo pattern; forming a fiber material about the logo pattern on the outer surface of the lathe via the collected melt-blown fibers; removing the formed fiber material to create an anti-counterfeit layer for use in the filtering mask, wherein at least one surface of the anti-counterfeit layer comprises the logo pattern within the fiber material; and assembling the anti-counterfeit layer within the filtering mask.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIGS. 1A-1B illustrate side views of a filtering mask according to an embodiment of the disclosure.
FIG. 2 illustrates a cross-sectional view of a filtering mask according to an embodiment of the disclosure.
FIG. 3 illustrates a detailed view of an anti-counterfeit layer according to an embodiment of the disclosure.
FIG. 4 illustrates a manufacturing process for at least a portion of a filtering mask according to an embodiment of the disclosure.
FIG. 5 illustrates a lathe for use in the manufacturing process of FIG. 4 according to an embodiment of the disclosure.
FIGS. 6A-6B illustrate a method for identifying a legitimate filtering mask according to an embodiment of the disclosure.

### DETAILED DESCRIPTION

Embodiments of the disclosure include systems and methods for identifying a legitimate/authentic air purifying filter and/or mask (e.g. from a specific manufacturer/company) and preventing counterfeit or fake products. Typical filtering masks use a particulate filtering material to provide breathable air to a user. These filtering masks are important personal protection equipment for workers who require respiratory protection in many industries, such as mining, ship building and heavy machinery. These filtering masks may also be worn by regular consumers who live in highly polluted areas.

Typical filtering masks may be certified to filter a certain type and/or amount of harmful substances. Counterfeit masks may exist that are produced by other (e.g. illegitimate and/or unauthorized) companies, where the masks may be marketed identically to the legitimate masks, or in some cases the counterfeit masks may impersonate the legitimate masks. The counterfeit masks may mimic legitimate filtering masks without providing the same level of protection. If a user attempts to use a counterfeit filtering mask that is not designed to filter harmful substances, the mask may not provide adequate protection to the user. This may cause a user to be exposed to dangerous particulate matter, even though the user may believe he or she is protected by using the filtering mask/air purifying mask.

Embodiments of the disclosure include systems and methods for preventing the use of counterfeit filtering masks. To identify a legitimate mask, the mask comprises an anti-counterfeit element incorporated into the mask material. The anti-counterfeit element comprises one or more features incorporated into one layer of filtering material of the mask.

As the market for particulate filtering masks grows, counterfeit masks may become prevalent. This may impact the business of legitimate companies; may endanger workers who use the counterfeit masks; and may damage the reputation of the legitimate companies if users purchase counterfeit masks believing they are legitimate masks. Utilizing an anti-counterfeit element (e.g., such as specific anti-counterfeit layers) as disclosed herein, may allow users to identify legitimate masks and may protect the companies involved.

In some cases, the anti-counterfeit element may allow a user (or an individual person) to identify that the mask is a legitimate particulate filtering mask and not a counterfeit. For example, a person may purchase a legitimate particulate filtering mask, and before wearing/using it, he/she may verify that the mask is not a fake by observing the anti-counterfeit element (e.g., by following instructions provided by the legitimate manufacturer/company). Additionally, the anti-counterfeit element may prevent/mitigate liability for a legitimate company in the event that a person uses a fake particulate filtering mask. As an example, a person may use a mask that is a fake or counterfeit mask, the person may sue the legitimate company when the mask does not protect them, but the company may avoid/mitigate liability due to the anti-counterfeit element that is in legitimate masks, but not in the fake/counterfeit masks. In such instances, the legitimate manufacturer/company may keep some or all of its specific anti-counterfeit technology secret, and only selectively disclose, as needed, to protect itself by demonstrating that a failed mask is fake/illegitimate (e.g. from some other source, and therefore not the legal responsibility of the legitimate manufacturer/company).

Embodiments of the disclosure include an anti-counterfeit technology that comprises a "knurled" logo incorporated into the surface of at least one layer of filtering material within the mask, where the logo identifies the manufacturer of the mask. "Knurled" may describe the method for applying the logo to the filtering media. The process of knurling may comprise the use of a cylindrical lathe with a particular pattern on the outer surface of the lathe, where the pattern is applied to the material from the lathe. However, while typical knurling methods may involve pressing the lathe into the material to apply the pattern, disclosed embodiments may comprise a different use of the lathe to apply the pattern to the material (as described further herein).

In the embodiments disclosed herein, the anti-counterfeit layer comprises the knurled logo on at least one surface of the anti-counterfeit layer. The anti-counterfeit layer comprises an interior layer of the mask that may not be visible from the outside of the mask when the mask is fully assembled. When the anti-counterfeit layer is an interior layer of the mask, a user may at least partially disassemble the mask to view the anti-counterfeit layer within the material of the mask.

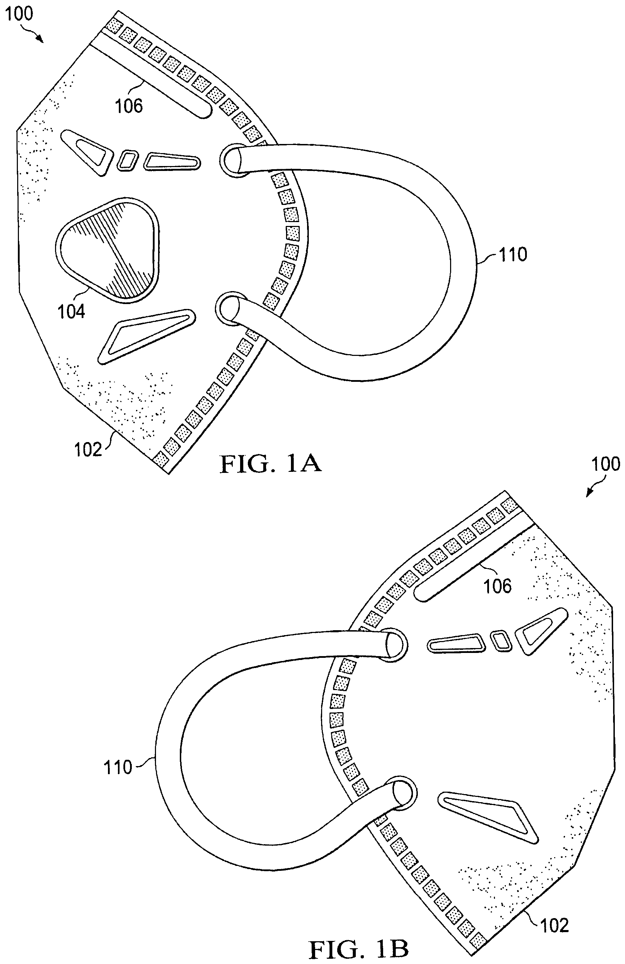

Referring now to FIGS. 1A-1B, an exemplary embodiment of a mask 100 is shown. FIG. 1A illustrates a first side of the mask 100, while FIG. 1B illustrates a second, opposite, side of the mask 100. The mask 100 may comprise at least one layer of a filter material or media 102 shaped to fit around a user's face. In some embodiments, the mask 100 may comprise a plurality of layers of filter media 102. The mask 100 may comprise an exhalation valve 104 configured to allow exhaled air and/or moisture to exit the mask 100 while the user is wearing the mask 100, while also preventing airflow into the mask 100 via the exhalation valve 104 (where airflow into the mask 100 may only be allowed through the filter media 102). The mask 100 may comprise a nose clip 106 configured to adjust to fit around a portion of a user's nose. The mask 100 may be configured to filter one or more harmful substances from the air from entering a user's nose and/or mouth.

The mask 100 may comprise one or more straps 110, which may comprise any of head straps, ear straps, neck straps, and the like. The straps 110 may be configured to hold the mask 100 against the user's face. In some embodiments, the straps 110 may be configured to hold the mask 100 against the user's face with enough force and/or tension to at least partially seal the mask 100 with the user's face.

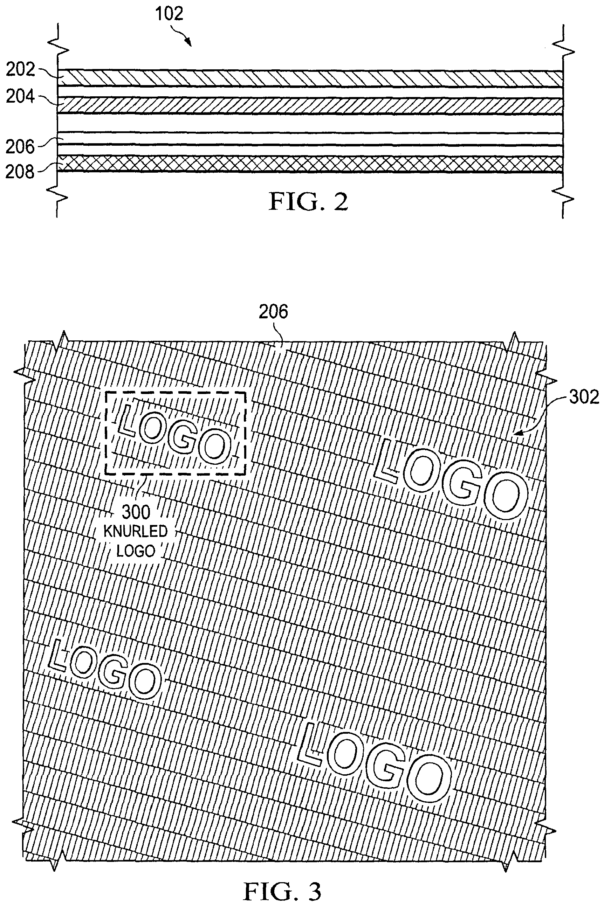

In the embodiments described herein, the filter media 102 of the mask 100 may comprise a plurality of layers. Referring to FIG. 2, a cross-sectional view of the filter media 102 is shown. The filter media 102 may comprise an inner layer 202 configured to form the inner surface of the mask 100 and to contact the user's face. The filter media 102 may comprise an outer layer 208 configured to form the outer surface of the mask 100 (furthest from the user's face). In some embodiments, the filter media 102 may comprise an optional interior layer 204 of additional filtering material (i.e., located between the inner layer 202 and the outer layer 208).

In the embodiments disclosed herein, the filter media 102 comprises an anti-counterfeit layer 206. The anti-counterfeit layer 206 is located between the inner layer 202 and the outer layer 208. The anti-counterfeit layer 206 may be located above or below any other interior layer(s) 204, depending on the embodiment.

FIG. 3 illustrates a detailed view of the anti-counterfeit layer 206 comprising a knurled logo 300 incorporated into at least one surface of the anti-counterfeit layer 206. The knurled logo 300 is incorporated as a pattern on the surface of the anti-counterfeit layer 206. In some embodiments, the logo 300 may comprise a size of at least 2 mm by 2 mm. In some embodiments, the logo 300 may comprise a size of at least 5 mm by 5 mm. In some embodiments, the logo 300 may comprise a size of approximately 55 millimeters (mm) long and approximately 10 mm tall. In some embodiments, the distance between two logos 300 may be between approximately 20 mm and 50 mm. In some embodiments, the anti-counterfeit layer 206 may comprise additional ridges and or pattern 302 within the material between the logos 300. In some embodiments, the pattern 302 may comprise a plurality of oblique lines, where the length of each line is between approximately 2 to 6 mm.

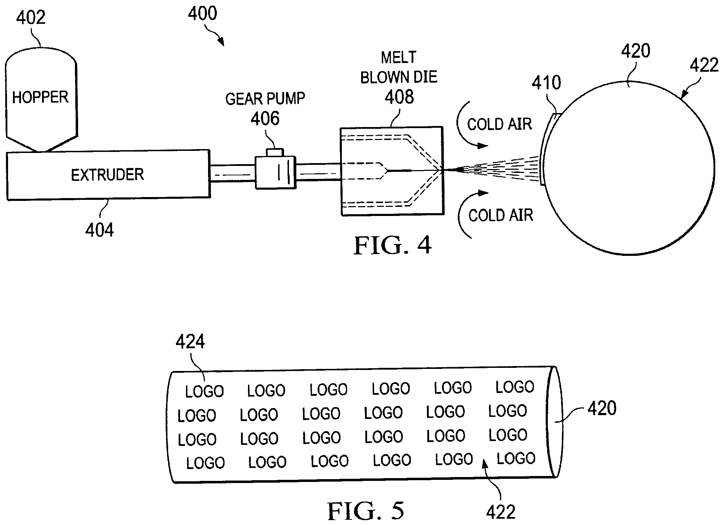

FIG. 4 illustrates an exemplary method for forming the anti-counterfeit layer 206 using a lathe 420 as a fiber collector. The process 400 comprises extruding a material 404 from a hopper 402 of the material, wherein the extruded material 404 may be moved through the process 400 via a gear pump 406 (possibly using a conveyer or other similar mechanism). The hopper 402 may comprise material that will eventually form a filtration material. The extruded material 404 is melt-blown by a melt-blowing die 408 and sprayed toward the lathe 420 to form a fiber material 410 on the surface of the lathe 420 of the melt-blown material. In some embodiments, the lathe 420 may be rotated while the fiber material 410 is formed onto the outer surface 422 of the lathe, thereby creating a sheet of fiber material 410 about the outer surface 422. This sheet of fiber material 410 may eventually form the anti-counterfeit layer 206 of the mask 100 (as described above).

In the embodiment shown in FIG. 4, the outer surface 422 of the lathe 420 comprises a pattern of logos incorporated into the outer surface 422. In some embodiments, the pattern of logos may protrude from the outer surface 422 of the lathe 420, such that when the fiber material 410 is formed onto the outer surface 422, it may be formed around the protruding logo, leaving an imprint of the logo in the finished material (as shown in FIG. 3) when the sheet of fiber material is removed from the lathe 420. In some embodiments, the lathe 420 may not press into or apply any pressure to the fiber material 410 formed onto the outer surface 422. This may prevent any damage to or compromise of the filtering properties of the fiber material 410.

FIG. 5 illustrates a detailed view of the lathe 420, showing the logo pattern 424 on the outer surface 422 of the lathe 420. The "logo" may comprise any text and/or image that may identify the manufacturer of the mask 100. The logo pattern 424 may comprise approximately 800-1000 individual logos on the outer surface 422 of the lathe 420. The logo pattern 424 may be created by precision machining of the outer surface 422 of the lathe 420, where each logo may be identical in shape and depth (i.e., distance protruding from the outer surface 422).

The manufacturing process of the anti-counterfeit material may be difficult for a counterfeiter to copy. A counterfeiter may not have the technology to create a precise logo within the filter material of the mask. Additionally, any other patterned texture on the anti-counterfeit material/layer may help distinguish the legitimate mask from counterfeit masks.

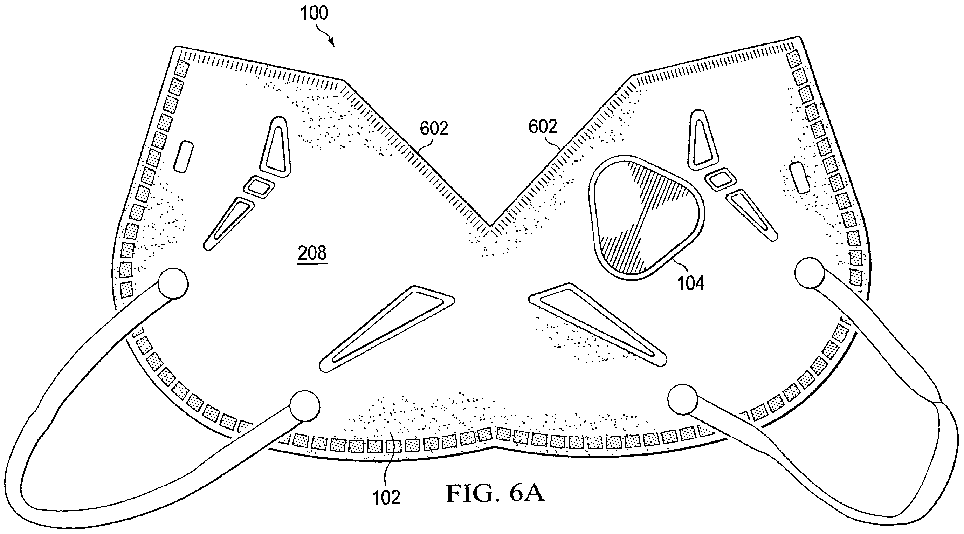

FIGS. 6A-6B illustrate a method for how a customer may identify a legitimate mask 100 by viewing the anti-counterfeit layer. As an exemplary use case, a customer may receive a large supply of masks 100 from a vendor. Before the masks are used by anyone, the customer may wish to verify that the masks are legitimate. To do so, the customer may deconstruct one of the masks 100 using the method shown in FIGS. 6A-6B.

In FIG. 6A, the filter material 102 of the mask 100 may be torn along a middle seam 602 to lay the mask 100 flat. This step may make it easier for the user to access the anti-counterfeit layer 206.

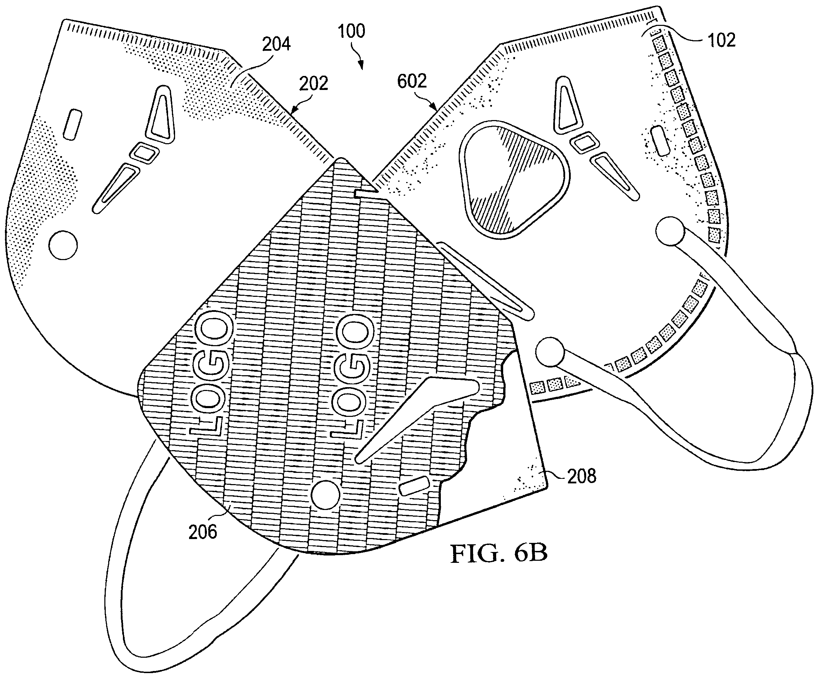

In FIG. 6B, at least the outer layer 208 of the filter material 102 may be torn away from the rest of the mask 100. In some embodiments, by tearing away the outer layer 208, the surface of the anti-counterfeit layer 206 that comprises the logos 300 may be exposed to the user (without having to tear away the anti-counterfeit layer as well). In an alternative embodiment, the anti-counterfeit layer 206 may be torn away from the rest of the mask 100 to expose the surface of the anti-counterfeit layer 206 that comprises the logos 300. In some embodiments, the anti-counterfeit layer 206 may be located directly below the outer layer 208, while in other embodiments the mask 100 may comprise additional inner layers. Then, after the customer has verified that the large supply of masks 100 is legitimate, they may continue with use and/or distribution of the masks 100.

## Claims

1. A filtering mask (100) comprising:
at least one filter media layer (102) configured to filter particulate matter to produce breathable air and comprising an outer layer and an inner layer, the inner layer forming an inner surface of the filtering mask; and
at least one anti-counterfeit layer (206) attached to the at least one filter media layer (102), configured to identify the filtering mask (100) as a legitimate filter and distinguish the filtering mask (100) from counterfeit masks, wherein the at least one anti-counterfeit layer (206) comprises at least one logo (300) incorporated into at least one surface of the at least one anti-counterfeit layer (206), wherein the at least one anti-counterfeit layer is located between the inner layer and the outer layer.

2. The filtering mask (100) of claim 1, wherein the at least one filter media layer comprises a plurality of filter media layers (202, 204, and 208), and wherein each of the plurality of filter media layers is configured to filter particulate matter from air flow through the filter.

3. The filtering mask (100) of claim 1 or 2, wherein the at least one anti-counterfeit layer (206) comprises a pattern of a plurality of logos (300) that are formed into material of the at least one anti-counterfeit layer (206).

4. The filtering mask (100) of any of claims 1 to 3, wherein the at least one logo (300) is incorporated into the at least one surface of the at least one anti-counterfeit layer (206) by forming the at least one anti-counterfeit layer (206) onto a lathe (420) comprising the at least one logo protruding from the at least one surface of the lathe.

5. The filtering mask (100) of any of claims 1 to 4, wherein the at least one logo (300) is incorporated into the at least one anti-counterfeit layer (206) without applying any pressure to material of the at least one anti-counterfeit layer (206).

6. The filtering mask (100) of any of claims 1 to 5, wherein the at least one anti-counterfeit layer (206) comprises a filtering material.

7. The filtering mask (100) of any of claims 1 to 6, wherein the at least one logo (300) comprises text and/or an image identifying a manufacturer of the filtering mask (100).

8. The filtering mask (100) of claim 1, wherein the outer layer is removable from the filtering mask (100) to expose the at least one anti-counterfeit layer (206).

9. A method of manufacturing a filtering mask, the method comprising:
extruding a filtering material from a source of the filtering material;
melt-blowing the extruded filtering material to form a plurality of fibers;
collecting the melt-blown fibers onto an outer surface of a lathe, wherein the outer surface of the lathe comprises a logo pattern;
forming a fiber material about the logo pattern on the outer surface of the lathe via the collected melt-blown fibers;
removing the formed fiber material to create an anti-counterfeit layer for use in the filtering mask, wherein at least one surface of the anti-counterfeit layer comprises the logo pattern within the fiber material; and
assembling the anti-counterfeit layer within the filtering mask.

10. The method of claim 9, further comprising:
forming an outer layer of the filtering material;
forming an inner layer of the filtering material; and
assembling the anti-counterfeit layer between the outer layer and the inner layer.

11. The method of claim 9 or 10, further comprising machining the outer surface of the lathe to create the logo pattern, wherein the logo pattern protrudes from the outer surface of the lathe.

12. The method of any of claims 9 to 11, wherein melt-blowing the extruded filtering material comprises blowing the plurality of fibers using cold air toward the outer surface of the lathe.

13. The method of any of claims 9 to 12, wherein the logo pattern comprises a plurality of the same logo in a repeated pattern.

14. The method of any of claims 9 to 13, further comprising rotating the outer surface of the lathe while collecting the melt-blown fibers onto the outer surface of the lathe, wherein the lathe comprises a cylindrical shape.

## Patentansprüche

1. Filtermaske (100), die Folgendes umfasst:
mindestens eine Filtermedienschicht (102), die konfiguriert ist, um Feinstaub zu filtern, um atembare Luft zu erzeugen, und die eine äußere Schicht und eine innere Schicht umfasst, wobei die innere Schicht eine innere Oberfläche der Filtermaske ausbildet; und
mindestens eine fälschungssichere Schicht (206), die an der mindestens einen Filtermedienschicht (102) befestigt und konfiguriert ist, um die Filtermaske (100) als einen legitimen Filter zu identifizieren und die Filtermaske (100) von gefälschten Masken zu unterscheiden, wobei die mindestens eine fälschungssichere Schicht (206) mindestens ein Logo (300) umfasst, das in mindestens eine Oberfläche der mindestens einen fälschungssicheren Schicht (206) eingearbeitet ist, wobei die mindestens eine fälschungssichere Schicht zwischen der inneren Schicht und der äußeren Schicht angeordnet ist.

2. Filtermaske (100) nach Anspruch 1, wobei die mindestens eine Filtermedienschicht eine Vielzahl von Filtermedienschichten (202, 204 und 208) umfasst, und wobei jede der Vielzahl von Filtermedienschichten konfiguriert ist, um Feinstaub aus dem Luftstrom durch den Filter zu filtern.

3. Filtermaske (100) nach Anspruch 1 oder 2, wobei die mindestens eine fälschungssichere Schicht (206) ein Muster aus einer Vielzahl von Logos (300) umfasst, die im Material der mindestens einen fälschungssicheren Schicht (206) ausgebildet sind.

4. Filtermaske (100) nach einem der Ansprüche 1 bis 3, wobei das mindestens eine Logo (300) in die mindestens eine Oberfläche der mindestens einen fälschungssicheren Schicht (206) eingearbeitet ist, indem die mindestens eine fälschungssichere Schicht (206) auf einer Drehbank (420) ausgebildet wird, die das mindestens eine Logo umfasst, das von der mindestens einen Oberfläche der Drehbank hervorsteht.

5. Filtermaske (100) nach einem der Ansprüche 1 bis 4, wobei das mindestens eine Logo (300) in die mindestens eine fälschungssichere Schicht (206) eingearbeitet wird, ohne Druck auf das Material der mindestens einen fälschungssicheren Schicht (206) aufzubringen.

6. Filtermaske (100) nach einem der Ansprüche 1 bis 5, wobei die mindestens eine fälschungssichere Schicht (206) ein Filtermaterial umfasst.

7. Filtermaske (100) nach einem der Ansprüche 1 bis 6, wobei das mindestens eine Logo (300) Text und/oder ein Bild umfasst, das einen Hersteller der Filtermaske (100) identifiziert.

8. Filtermaske (100) nach Anspruch 1, wobei die äußere Schicht von der Filtermaske (100) entfernt werden kann, um die mindestens eine fälschungssichere Schicht (206) freizulegen.

9. Verfahren zur Herstellung einer Filtermaske, wobei das Verfahren Folgendes umfasst:
Extrudieren eines Filtermaterials aus einer Quelle des Filtermaterials; Schmelzblasen des extrudierten Filtermaterials, um eine Vielzahl von Fasern auszubilden;
Sammeln der schmelzgeblasenen Fasern auf einer Außenoberfläche einer Drehbank, wobei die Außenoberfläche der Drehbank ein Logomuster umfasst;
Ausbilden eines Fasermaterials um das Logomuster auf der Außenoberfläche der Drehbank mittels der gesammelten schmelzgeblasenen Fasern;
Entfernen des ausgebildeten Fasermaterials, um eine fälschungssichere Schicht zur Verwendung in der Filtermaske zu erstellen, wobei mindestens eine Oberfläche der fälschungssicheren Schicht das Logomuster innerhalb des Fasermaterials umfasst; und
Montieren der fälschungssicheren Schicht innerhalb der Filtermaske.

10. Verfahren nach Anspruch 9, das ferner Folgendes umfasst:
Ausbilden einer äußeren Schicht des Filtermaterials; Ausbilden einer inneren Schicht des Filtermaterials; und
Montieren der fälschungssicheren Schicht zwischen der äußeren Schicht und der inneren Schicht.

11. Verfahren nach Anspruch 9 oder 10, das ferner die Bearbeitung der Außenoberfläche der Drehmaschine umfasst, um das Logomuster zu erstellen, wobei das Logomuster von der Außenoberfläche der Drehmaschine vorsteht.

12. Verfahren nach einem der Ansprüche 9 bis 11, wobei das Schmelzblasen des extrudierten Fasermaterials das Blasen der Vielzahl von Fasern unter Verwendung von kalter Luft in Richtung der Außenoberfläche der Drehbank umfasst.

13. Verfahren nach einem der Ansprüche 9 bis 12, wobei das Logomuster eine Vielzahl desselben Logos in einem wiederholten Muster umfasst.

14. Verfahren nach einem der Ansprüche 9 bis 13, das ferner das Drehen der Außenoberfläche der Drehbank umfasst, während die schmelzgeblasenen Fasern auf der Außenoberfläche der Drehbank gesammelt werden, wobei die Drehbank eine zylindrische Form aufweist.

## Revendications

1. Masque filtrant (100) comprenant :
au moins une couche de milieu filtrant (102) configurée pour filtrer une matière particulaire pour produire de l'air respirable et comprenant une couche externe et une couche interne, la couche interne formant une surface interne du masque filtrant ; et
au moins une couche anti-contrefaçon (206) fixée à la au moins une couche de milieu filtrant (102), configurée pour identifier le masque filtrant (100) comme un filtre légitime et distinguer le masque filtrant (100) de masques contrefaits, dans lequel la au moins une couche anti-contrefaçon (206) comprend au moins un logo (300) incorporé dans au moins une surface de la au moins une couche anti-contrefaçon (206), dans lequel la au moins une couche anti-contrefaçon est située entre la couche interne et la couche externe.

2. Masque filtrant (100) selon la revendication 1, dans lequel la au moins une couche de milieu filtrant comprend une pluralité de couches de milieu filtrant (202, 204 et 208), et dans lequel chacune de la pluralité de couches de milieu filtrant est configurée pour filtrer la matière particulaire du flux d'air à travers le filtre.

3. Masque filtrant (100) selon la revendication 1 ou 2, dans lequel la au moins une couche anti-contrefaçon (206) comprend un motif d'une pluralité de logos (300) qui sont formés dans le matériau de la au moins une couche anti-contrefaçon (206).

4. Masque filtrant (100) selon l'une quelconque des revendications 1 à 3, dans lequel le au moins un logo (300) est incorporé dans la au moins une surface de la au moins une couche anti-contrefaçon (206) en formant la au moins une couche anti-contrefaçon (206) sur un tour (420) comprenant le au moins un logo faisant saillie de la au moins une surface du tour.

5. Masque filtrant (100) selon l'une quelconque des revendications 1 à 4, dans lequel le au moins un logo (300) est incorporé dans la au moins une couche anti-contrefaçon (206) sans appliquer de pression sur le matériau de la au moins une couche anti-contrefaçon (206).

6. Masque filtrant (100) selon l'une quelconque des revendications 1 à 5, dans lequel la au moins une couche anti-contrefaçon (206) comprend un matériau filtrant.

7. Masque filtrant (100) selon l'une quelconque des revendications 1 à 6, dans lequel le au moins un logo (300) comprend du texte et/ou une image identifiant un fabricant du masque filtrant (100).

8. Masque filtrant (100) selon la revendication 1, dans lequel la couche externe est amovible du masque filtrant (100) pour exposer la au moins une couche anti-contrefaçon (206).

9. Procédé de fabrication d'un masque filtrant, le procédé comprenant :
l'extrusion d'un matériau filtrant à partir d'une source du matériau filtrant ;
la fusion-soufflage du matériau filtrant extrudé pour former une pluralité de fibres ;
la collecte des fibres de fusion-soufflage sur une surface externe d'un tour, dans lequel la surface externe du tour comprend un motif de logo ;
la formation d'un matériau fibreux autour du motif de logo sur la surface externe du tour via les fibres de fusion-soufflage collectées ;
le retrait du matériau fibreux formé pour créer une couche anti-contrefaçon destinée à être utilisée dans le masque filtrant, dans lequel au moins une surface de la couche anti-contrefaçon comprend le motif de logo au sein du matériau fibreux ; et
l'assemblage de la couche anti-contrefaçon au sein du masque filtrant.

10. Procédé selon la revendication 9, comprenant en outre :
la formation d'une couche externe du matériau filtrant ;
la formation d'une couche interne du matériau filtrant ; et
l'assemblage de la couche anti-contrefaçon entre la couche externe et la couche interne.

11. Procédé selon la revendication 9 ou 10, comprenant en outre l'usinage de la surface externe du tour pour créer le motif de logo, dans lequel le motif de logo fait saillie de la surface externe du tour.

12. Procédé selon l'une quelconque des revendications 9 à 11, dans lequel le procédé de fusion-soufflage du matériau filtrant extrudé comprend le soufflage de la pluralité de fibres à l'aide d'air froid vers la surface externe du tour.

13. Procédé selon l'une quelconque des revendications 9 à 12, dans lequel le motif de logo comprend une pluralité du même logo dans un motif répété.

14. Procédé selon l'une quelconque des revendications 9 à 13, comprenant en outre la rotation de la surface externe du tour tout en collectant les fibres de fusion-soufflage sur la surface externe du tour, dans lequel le tour comprend une forme cylindrique.
